# EUROPÄISCHE PATENTSCHRIFT

(11) **EP 3 655 243 B1**
(45) Veröffentlichungstag und Bekanntmachung des Hinweises auf die Patenterteilung: **01.11.2023**
(21) Anmeldenummer: 17818470.1
(22) Anmeldetag: 07.12.2017
(51) Int. Cl.: B29D 30/38, B29D 30/40, B60C 1/00, B29B 15/12, D06M 15/263, D06M 15/55, D06M 15/693, D06M 13/395, C08J 5/06, C08L 9/02, C08L 7/00

(54) **VERFAHREN ZUR HERSTELLUNG EINES FAHRZEUGREIFENS UND FAHRZEUGREIFEN HERGESTELLT NACH DEM VERFAHREN UND VERWENDUNG VON BEHANDELTEN FESTIGKEITSTRÄGERN**
METHOD FOR PRODUCING A VEHICLE TIRE, VEHICLE TIRE PRODUCED ACCORDING TO THE METHOD, AND USE OF TREATED REINFORCING SUPPORTS
PROCÉDÉ POUR LA FABRICATION D'UN PNEU DE VÉHICULE ET PNEU DE VÉHICULE FABRIQUÉ SELON LE PROCÉDÉ ET UTILISATION DE SUPPORTS DE RENFORT TRAITÉS

(30) Priorität: 20.07.2017 DE 102017212455
(43) Veröffentlichungstag der Anmeldung: 27.05.2020
(73) Patentinhaber: Continental Reifen Deutschland GmbH, 30165 Hannover (DE); Kordsa Teknik Tekstil Anonim Sirketi, 41310 Izmit/Kocaeli (TR)
(72) Erfinder: KRAMER, Thomas, 30419 Hannover (DE); NABIH, Nermeen, 30419 Hannover (DE); SCHUNACK, Michael, 30419 Hannover (DE); SCHMAUNZ-HIRSCH, Cornelia, 30419 Hannover (DE); PINTO, Diana, 30419 Hannover (DE); CEVAHIR, Nacide Nurcin, 41060 Bagçesme-Izmit Kocaeli (TR); SEN, Mustafa Yasin, 54030 Adapazari Sakarya (TR); FIDAN, Sadettin, 30827 Garbsen (DE); AYYILDIZ, Yucel, 4100 Izmit Kocaeli (TR); KANYA, Basak, 41050 Izmit Kocaeli (TR)
(74) Vertreter: Meissner Bolte Partnerschaft mbB
(86) Internationale Anmeldenummer: PCT/EP2017/081766
(87) Internationale Veröffentlichungsnummer: WO 2019/015792

(56) Entgegenhaltungen:
- EP-A1- 2 955 268
- WO-A1-2014/091376
- DE-A1-102014 225 821

## Beschreibung

Die Erfindung betrifft ein Verfahren zur Herstellung eines Fahrzeugreifens und einen Fahrzeugreifen, der nach dem Verfahren hergestellt ist. Die Erfindung betrifft ferner die Verwendung von behandelten Festigkeitsträgern.

Es ist bekannt, dass Fahrzeugreifen in verschiedenen Bauteilen Festigkeitsträger zur Verstärkung aufweisen. Auch technische Gummiartikel, wie Gurte, Riemen und Schläuche weisen Festigkeitsträger auf.

Hierbei sind die Festigkeitsträger üblicherweise von mindestens einer Kautschukmischung umgeben, die auch Gummierungsmischung genannt wird. Eine Problematik besteht darin, dass die Festigkeitsträger und die umgebende Gummierungsmischung unterschiedliche Festigkeiten aufweisen. Insbesondere bei andauernder mechanischer und dynamischer Beanspruchung, wie im Fahrbetrieb des Fahrzeugreifens, ist daher eine ausreichende Haftung zwischen Festigkeitsträger und umgebender Gummierungsmischung notwendig. Im Stand der Technik ist bekannt, die Festigkeitsträger vor der Gummierung für eine ausreichende Haftung zu aktivieren (Haftungsaktivierung), wobei üblicherweise sogenannte RFL-Dips (Resorcin-Formaldehyd-Latex) verwendet werden, durch die die Festigkeitsträger getaucht werden.

Ferner werden u.a. geblockte Isocyanat- und/oder Epoxy-Verbindungen in Kombination mit RFL-Dips eingesetzt, um die Festigkeitsträger vor- oder weiter zu aktivieren. Die WO 2005/026239 A1 offenbart beispielsweise die Verwendung von Polyisocyanaten und RFL ohne Epoxy-Verbindungen.

Allerdings sind Resorcin und Formaldehyde als umwelt- und gesundheitsschädlich eingestuft, sodass man bestrebt ist hierfür Alternativen bereitzustellen. So offenbart die DE 102014211365 A1 die Behandlung von textilem Gewebe bzw. textilen Festigkeitsträgern mit einem Malein-funktionalisiertem Polymer, um eine verbesserte Haftung an Kautschukmischungen in Festigkeitsträgerlagen von Fahrzeugreifen zu erzielen.

Weitere Verfahren zur Behandlung von Festigkeitsträgern sind in den Dokumenten WO2014091376 A1, DE102014225821 A1 und EP2955268 A1 offenbart.

Im Stand der Technik werden jedoch bei der Herstellung von Fahrzeugreifen, insbesondere bei Verwendung nicht voraktivierter Festigkeitsträger, meist zwei verschiedene Dips nacheinander benötigt, um die Festigkeitsträger ausreichend für die Haftung an die jeweiligen Kautschukmischungen enthaltend Naturkautschuk (NR), synthetisches Polyisopren (IR), Butadien-Kautschuk (BR) und/oder Styrol-Butadien-Kautschuk (SBR) zu aktivieren.

Der vorliegenden Erfindung liegt daher die Aufgabe zugrunde, ein Verfahren zur Herstellung eines Fahrzeugreifens umfassend wenigstens eine Festigkeitsträgerlage mit textilen Festigkeitsträgern bereitzustellen, bei dem auf umwelt- und gesundheitsschädliche Substanzen verzichtet werden soll, und welches zudem vergleichsweise einfach ist. Gleichzeitig soll die Haftung zwischen Festigkeitsträgern und Gummierungsmischung nicht signifikant negativ beeinträchtigt oder sogar ebenfalls verbessert werden.

Gelöst wird diese Aufgabe erfindungsgemäß durch ein Verfahren zur Herstellung eines Fahrzeugreifens umfassend wenigstens eine Festigkeitsträgerlage mit textilen Festigkeitsträgern, wobei das Verfahren wenigstens folgende Verfahrensschritte umfasst:
a) Bereitstellen von textilen Festigkeitsträgern;
b) Bereitstellen eines Bades, welches frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen, durch wenigstens folgende Verfahrensschritte:
   b1) Zugabe wenigstens einer Polycarbonsäure zu Wasser; und
   b2) Zugabe wenigstens einer Base; und
   b3) Zugabe wenigstens einer Epoxy-Verbindung; und
   b4) Zugabe wenigstens einer Polyisocyanat-Verbindung; und
   b5) Zugabe wenigstens eines VP-Latex; und
   b6) Vermischen der Substanzen aus b1) bis b5);
c) Tauchen der Festigkeitsträger aus Schritt a) in dem Bad aus Schritt b);
d) Anschließende Heißverstreckung der getauchten Festigkeitsträger aus Schritt c) bei einer Temperatur im Bereich von 100 °C bis 260°C;
e) Weiterverarbeitung der Festigkeitsträger aus Schritt d) zu einer Festigkeitsträgerlage in einem Fahrzeugreifenrohling;
f) Vulkanisation des Fahrzeugreifenrohlings, wobei das Bad aus Schritt b6) die Polycarbonsäure in einer Menge von 0,1-10 Gew.-%, bevorzugt 0,1-2 Gew.-%, die Epoxy-Verbindung in einer Menge von 0,1 bis 2 Gew.-%, die Polyisocyanat-Verbindung in einer Menge von 0,7 bis 3 Gew.-% und den wenigstens einen VP-Latex in einer Menge von 6 bis 25 Gew.-% enthält.

Dadurch, dass das Bad aus Schritt b) die Substanzen Polycarbonsäure, Epoxy-Verbindung, Polyisocyanat-Verbindung und VP-Latex enthält, ist es möglich bei der Herstellung des Fahrzeugreifens auch nicht voraktivierte Festigkeitsträger in nur diesem einen Bad zu dippen.

Die genannten Bestandteile ermöglichen in ihrer Kombination eine Vielzahl von chemischen Reaktionen, durch die die Festigkeitsträger, die darin getaucht werden, gut haftungsaktiviert werden. Hierbei kann insbesondere bei der Herstellung des Fahrzeugreifens auf freies Resorcin sowie Resorcin-Vorkondensate, insbesondere Resorcin-Formaldehyd-Vorkondensate, und freies Formaldehyd sowie Formaldehyd freisetzende Substanzen verzichtet werden, also auf die Substanzen, die in derartigen Bädern/Dips aus dem Stand der Technik vorhanden waren oder sind und die als gesundheits- und umweltschädlich eingestuft sind.

Das erfindungsgemäße Verfahren zur Herstellung des Fahrzeugreifens ist somit vergleichsweise einfach und gesundheits- und umweltfreundlich, wobei gleichzeitig eine vergleichbare Haltbarkeit des Fahrzeugreifens erzielt wird.

Gemäß Schritt a) werden bei dem erfindungsgemäßen Verfahren textile Festigkeitsträger bereitgestellt. Prinzipiell kann es sich um alle textilen Festigkeitsträger handeln, die in Fahrzeugreifen für eine ausreichende Verstärkung sorgen. Bevorzugt ist es, dass die textilen Festigkeitsträger in Schritt a) ausgewählt sind aus der Gruppe bestehend aus Polyethylenterephthalat (PET), Polyethylennaphthalat (PEN), Polybutylenterephthalat (PBT), Polycarbonat (PC), Cellulosen, Regeneratcellulosen, Celluloseestern, Carbonfasern, Polyketonen, m-Aramid, p-Aramid, Gemischen aus m-Aramid und p-Aramid und Polyamiden, welche ausgewählt sind aus der Gruppe bestehend aus Polyamid 46 (PA 4.6), Polyamid 410 (PA 4.10), Polyamid 6 (PA 6), Polyamid 66 (PA 6.6 Polyhexamethylenadipinamid), Polyamid 612 (PA 6.12), Polyamid 1010 (PA 10.10) und Polyamid 1212 (PA 12.12), wobei auch eine Kombination von zwei oder mehreren sämtlicher genannter textilen Festigkeitsträger umfasst ist.

Somit kann die herzustellende Festigkeitsträgerlage für Fahrzeugreifen z. B. auch Hybridcorde aus verschiedenen textilen Garnen aufweisen, wie z. B. Hybridcorde aus PET und Polyamid 66 (PA 6.6 Polyhexamethylenadipinamid).

Besonders bevorzugt enthalten die textilen Festigkeitsträger Polyethylenterephthalat (PET) und/oder Cellulose und/oder Regeneratcellulose und/oder Celluloseester und/oder Polyamid 66 (PA 6.6 Polyhexamethylenadipinamid).

Bevorzugte Regeneratcellulosen sind unter dem Namen Rayon bekannt.

Die textilen Festigkeitsträger sind bevorzugt Corde, die wenigstens ein verdrehtes Garn aufweisen.

Hierbei sind alle im Stand der Technik bekannten Feinheiten (Titer in der Einheit dtex) und Verdrehungen der Corde und Garne denkbar. Zweckmäßig ist es, wenn der Titer eines jeden Garnes zwischen 200 und 5000 dtex beträgt und wenn die Verdrehung der Garne und Corde zwischen 100 und 800 t/m beträgt.

Die textilen Festigkeitsträger weisen die genannten Eigenschaften bevorzugt bereits vor dem Verfahrensschritt a) auf, d.h. sie werden bevorzugt erst verdreht und anschließend mit den Verfahrensschritten a) ff. behandelt.

Für den Fall, dass die textilen Festigkeitsträger als Gewebe in die Gummierungsmischung eingebettet werden, erfolgt bevorzugt nach dem Verdrehen und vor der Behandlung gemäß der Verfahrensschritte a) bis f) wie dem Fachmann bekannt ein Webschritt.

Gemäß einer bevorzugten Weiterbildung der Erfindung sind die Festigkeitsträger Corde aus jeweils einem Garn, womit ein verdrehtes Garn jeweils einen Cord darstellt.

Gemäß einer weiteren bevorzugten Weiterbildung der Erfindung sind die Festigkeitsträger Corde aus wenigstens zwei, besonders bevorzugt zwei, Garnen.

Gemäß einer weiteren bevorzugten Weiterbildung der Erfindung enthält die in Schritt e) hergestellte Festigkeitsträgerlage bzw. die des erfindungsgemäß hergestellten Fahrzeugreifens Corde aus unterschiedlich vielen Garnen als Festigkeitsträger.

Gemäß Schritt b) erfolgt das Bereitstellen eines Bades, welches frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen. Der Ausdruck "frei von" bedeutet hierbei, dass das Bad 0 bis 0,1 Gew.-%, bevorzugt jedoch 0 Gew.-%, derartiger Substanzen enthält, wobei sich die maximale Menge jeweils auf die Einzelsubstanz bezieht.

In Schritt b) werden durch die oben aufgeführten Schritte b1) bis b5) die wesentlichen Bestandteile zu einer Zusammensetzung, also zu einem Bad, zusammengegeben und gemäß b6) vermischt. Hierbei soll die Auflistung b1) bis b5) keine zeitliche Reihenfolge vorgeben. Auch kann zwischendurch ein zusätzlicher Schritt des Durchmischens (analog zu b6)) erfolgen oder die Bestandteile gruppiert zugegeben werden.

Bevorzugt ist jedoch, dass die Zugabe des VP-Latex und einem optional zusätzlichen Latex bei einem pH-Wert von 5 bis 11 erfolgt. Bei pH-Werten über 5 wird die Bildung von Agglomeraten vermieden.

Gemäß Schritt b1) erfolgt die Zugabe wenigstens einer Polycarbonsäure zu Wasser bzw. das Bereitstellen wenigstens einer Polycarbonsäure in Wasser. Durch die Polycarbonsäure werden im Vergleich zu Bädern aus dem Stand der Technik zusätzliche chemische Reaktionen, auch in Zusammenspiel mit den anderen genannten Bestandteilen, ermöglicht, wie Säure/Epoxy- Säure/Isocyanat-, Alkohol/Isocyanat-Reaktionen. Alkohol-Gruppen werden durch die Reaktion der Polycarbonsäure mit der Epoxy-Verbindung in das Reaktionssystem eingebracht.

Bevorzugt basiert die Polycarbonsäure in Schritt b1) zu 10 bis 100 mol-%, besonders bevorzugt 30 bis 100 mol.-%, ganz besonders bevorzugt 50 bis 100 mol.-%, wiederum bevorzugt 70 bis 100 mol.-%, wiederum ganz besonders bevorzugt 90 bis 100 mol.-% auf Carbonsäuregruppen-haltigen Monomeren. Gemäß einer besonders vorteilhaften Ausführungsform der Erfindung basiert die Polycarbonsäure in Schritt b1) zu 100 mol-% auf Carbonsäuregruppen-haltigen Monomeren, wobei weitere funktionelle Gruppen nicht ausgeschlossen werden.

Hierdurch ist die Haftungsaktivierung der Festigkeitsträger des erfindungsgemäß hergestellten Fahrzeugreifens besonders effektiv; insbesondere können die genannten chemischen Reaktionen in großem Ausmaß stattfinden.

Bevorzugt weist die Polycarbonsäure in Schritt b1) ein Gewichtsmittel des Molekulargewichtes Mw gemäß GPC von 1.000 bis 500.000 g/mol, bevorzugt 3.000 bis 100.000 g/mol auf.

Bevorzugt basiert die Polycarbonsäure auf Acrylsäure-, Methacrylsäure-, Itaconsäure-, Crotonsäure-, Zimtsäure- und/oder Maleinsäure-Monomeren.

Gemäß einer bevorzugten Ausführungsform handelt es sich bei der Polycarbonsäure (auf Basis von Acrylsäure-Monomeren) um ein Acrylharz.

Besonders bevorzugt beinhaltet die Polycarbonsäure einen Polyalkohol als Vernetzer.

Besonders geeignete Polycarbonsäuren auf Basis von Acrylsäure-Monomeren (Acrylharz umfassend Carbonsäuregruppen), welche einen Polyalkohol enthalten, sind beispielsweise unter den Handelsnamen Acrodur 950 L und Acrodur DS 3530 der Firma BASF Corp. erhältlich.

Gemäß Schritt b2) erfolgt erfindungsgemäß die Zugabe wenigstens einer Base. Insbesondere soll mit der Base ein pH-Wert von 5 bis 11, bevorzugt 7 bis 11 eingestellt werden.

Die Base ist bevorzugt eine flüchtige Base, die oder deren Bestandteile während des Verfahrens verdampfen.

Gemäß einer besonders vorteilhaften Ausführungsform der Erfindung ist die Base in Schritt b2) Ammoniumhydroxid, also eine wässrige Lösung von Ammoniak. Hierdurch wird die Polycarbonsäure für die oben genannten chemischen Reaktionen aktiviert und Ammoniak verdampft während des Verfahrens.

Gemäß Schritt b3) erfolgt erfindungsgemäß die Zugabe wenigstens einer Epoxy-Verbindung. Epoxy-Verbindungen als Bestandteil von Bädern/Dips für textile Festigkeitsträger sind dem Fachmann bekannt. Bevorzugt ist es im Rahmen der vorliegenden Erfindung, dass die Epoxy-Verbindung in Schritt b3) ausgewählt ist aus der Gruppe bestehend aus Glycidyl-basiertem Glycerol, Sorbitol basierten Epoxy-Verbindungen, Phenol basierten Novolak Epoxy-Verbindungen und Cresol basierten Novolak Epoxy-Verbindungen.

Diese Verbindungen sind besonders geeignet an den komplexen chemischen Reaktionen, insbesondere mit der Polycarbonsäure, teilzunehmen und tragen daher besonders effektiv zur Haftungsaktivierung der Festigkeitsträger des erfindungsgemäß hergestellten Fahrzeugreifens bei.

Besonders geeignet ist beispielsweise ein Glycerol-basierter Polyglycidylether, wie z. B. Denacol^{™} EX-313, welcher u. a. in der DE 69722388 T2 beschrieben ist.

Gemäß Schritt b4) erfolgt erfindungsgemäß die Zugabe wenigstens einer Polyisocyanat-Verbindung. Polyisocyanat-Verbindungen als Bestandteil von Bädern/Dips für textile Festigkeitsträger sind dem Fachmann bekannt.

Die Polyisocyanat-Verbindung kann dabei geblockt vorliegen oder als Dimer oder höheres Homolog, also "mit sich selbst geblockt", *engl.* "self-blocked".

Geblockte Polyisocyanate werden beispielsweise und bevorzugt dadurch erhalten, dass freie Isocyanate mit wenigstens einer Substanz geblockt werden, welche ausgewählt ist aus der Gruppe enthaltend Phenol, Thiophenol, Chlorphenol, Cresol, Resorcin, p-sec-Butylphenol, p-tert-Butylphenol, p-sec-Amylphenol, p-Octylphenol, p-Nonylphenol, tert-Butylalkohol, Diphenylamin, Dimethylanilin, Phthalimid, δ-Valerolactam, ε-Caprolactam, Malonsäuredialkylester, Acetylaceton, Acetessigsäurealkylester, Acetoxim, Methylethylketoxim, 3,5-Dimethylpyrazol, Cyclohexanonoxim, 3-Hydroxypyridin und saures Natriumsulfit.

Bevorzugt ist es im Rahmen der vorliegenden Erfindung, dass die Polyisocyanat-Verbindung in Schritt b4) Bausteine umfasst, die ausgewählt sind aus der Gruppe bestehend aus Tetramethylendiisocyanat, Hexamethylendiisocyanat, Diphenylmethan-4,4'-Diisocyanat, Octamethylendiisocyanat, Decamethylendiisocyanat, Dodecamethylendiisocyanat, aromatische Diisocyanate umfassend 2,4- oder 2,6-Toluoldiisocyanat, Tetramethylxyloldiisocyanat, p-Xyloldiisocyanat, 2,4`- oder 4,4`-Diisocyanatdiphenylmethan, 1,3- oder 1,4-Phenyldiisocyanat.

Gemäß Schritt b5) erfolgt erfindungsgemäß die Zugabe wenigstens eines VP-Latex. VP-Latex ist dem Fachmann bekannt. "VP" steht für "Vinyl-Pyridin", wobei bekannte VP-Latizes auch zusätzliche Monomere umfassen können. Ein bevorzugtes Beispiel für einen VP-Latex ist ein Vinyl-Pyridin-Latex, welcher typischerweise 15 % Vinyl-Pyridin, 15 % Styrol und 70 % Butadien Monomere umfasst.

Neben dem erfindungsgemäß zugegebenen VP-Latex können dem Bad in Schritt b) einer oder mehrere zusätzliche Latizes zugegeben werden, wie etwa ein Styrol-Butadien-Latex. Insbesondere durch einen Styrol-Butadien-Latex als weiteren Latex ist eine Optimierung der Zusammensetzung ohne Einbußen in den Eigenschaften möglich.

Bevorzugt ist die Butadien Komponente aus der Gruppe bestehend aus 1,3-Butadien und 2-Methyl-1,3-Butadien ausgewählt. Die Styrol-Komponente ist bevorzugt ausgewählt aus der Gruppe bestehend aus Styrol, α-Methylstyrol, 2-Methylstyrol, 3-Methylstyrol, 4-Methylstyrol, 2,4-Diisopropylstyrol, 2,4-Dimethylstyrol, 4-t-Butylstyrol und Hydroxymethylstyrol. Das Vinylpyridin Monomer ist bevorzugt ausgewählt aus der Gruppe bestehend aus 2-Vinylpyridin, 3-Vinylpyridin, 4-Vinylpyridin, 2-Methyl-5-Vinylpyridin und 5-Ethyl-2-Vinylpyridin.

Zudem ist es denkbar, dass zusätzlich carboxylierter VP-Latex und/oder carboxylierter Styrol-Butadien-Latex zugegeben wird, wobei mit "carboxyliert" gemeint ist, dass die genannten Latizes Carbonsäure-Gruppen als funktionelle Gruppen tragen können. Hierdurch wird das Reaktionssystem wie oben beschrieben weiter unterstützt, sodass die Haftungsaktivierung weiter optimiert wird.

Gemäß Schritt b6) werden die Bestandteile miteinander vermischt, wobei auch wie oben ausgeführt zwischenzeitlich Durchmischungsschritte durchgeführt werden können.

Das Vermischen der Substanzen erfolgt auf dem Fachmann bekannte Weise.

Die Mengen der einzelnen genannten Substanzen können je nach Art und Molekulargewichten variieren. Erfindungsgemäß enthält das Bad aus Schritt b6) die Polycarbonsäure in einer Menge von 0,1-10 Gew.-%, bevorzugt 0,1-2 Gew.-%, die Epoxy-Verbindung in einer Menge von 0,1 bis 2 Gew.-%, die Polyisocyanat-Verbindung in einer Menge von 0,7 bis 3 Gew.-% und den wenigstens einen VP-Latex in einer Menge von 6 bis 25 Gew.-%.

Der Rest kann dabei insbesondere Wasser sein oder es können zusätzliche Substanzen enthalten sein, wie insbesondere der genannte Styrol-Butadien-Latex und/oder Klebrigmacher (*engl.* "tackifier") und/oder Antischaummittel (*engl.* "anti-foaming agent"). Die Verwendung der genannten optionalen Substanzen und deren Mengen richten sich nach dem textilen Material der Festigkeitsträger und den gewünschten Eigenschaften bei der Herstellung, also während des Verfahrens, und später in der Anwendung, wie insbesondere im Reifen.

Gemäß Schritt c) erfolgt erfindungsgemäß das Tauchen der Festigkeitsträger aus Schritt a) in dem Bad aus Schritt b). Hierdurch werden die textilen Festigkeitsträger für eine gute Haltbarkeit im Fahrzeugreifen haftungsaktiviert.

Das Tauchen erfolgt dabei auf dem Fachmann bekannte Weise unter Verwendung bekannter Vorrichtungen.

Die in Schritt a) bereitgestellten Festigkeitsträger müssen nicht vorab durch einen zusätzlichen Tauchschritt aktiviert werden.

Die Festigkeitsträger können aber vorab aktiviert werden. Insbesondere bei nicht voraktivierten textilen Materialien kann es sich als vorteilhaft erweisen, die Festigkeitsträger zeitlich vor dem Tauchen in dem Bad aus Schritt b) in einem Bad enthaltend eine oder mehrere Epoxy-Verbindungen und eine oder mehrere Polyisocyanat-Verbindungen zu tauchen. Hierdurch erfolgt zwar ein zusätzlicher Tauchschritt, aber gleichzeitig wird die Haftungsaktivierung zur Anbindung an eine Kautschukmischung / Gummierungsmischung im Fahrzeugreifen weiter optimiert.

Gemäß Schritt d) erfolgt erfindungsgemäß die anschließende Heißverstreckung der getauchten Festigkeitsträger aus Schritt c). Dies erfolgt ebenfalls unter Verwendung bekannter Vorrichtungen - wie insbesondere 1- oder 2-Zonen-Öfen, durch welche die Festigkeitsträger bevorzugt kontinuierlich hindurch geführt werden - und auf jeweils an die textilen Materialien angepasste Weise. Die Temperatur bei der Heißverstreckung beträgt dabei 100 bis 260 °C.

Hierbei können auch mehrere Temperaturbehandlungen bei unterschiedlichen Temperaturen nacheinander durchgeführt werden.

Bevorzugt und beispielsweise werden getauchte Festigkeitsträger aus Nylon (PA 6.6) als textilem Material für 30 bis 60 Sekunden bei 180 bis 210 °C und anschließend 20 bis 100 Sekunden bei 220 bis 260 °C behandelt.

Ein weiterer Vorteil der Erfindung besteht darin, dass der gedippte Festigkeitsträger, insbesondere Cord, keine augenscheinliche Verfärbung zeigt, wodurch die Herstellung von Festigkeitsträgern in verschiedenen Farben durch Zusatz von Farbstoffen möglich ist. Dies kann etwa zur besseren Vermarktung von Produkten oder in der Weiterverarbeitung der gedippten Festigkeitsträger beispielsweise zur Vermeidung von Verwechslungen genutzt werden.

Gemäß Schritt e) erfolgt erfindungsgemäß die Weiterverarbeitung der Festigkeitsträger aus Schritt d) zu einer Festigkeitsträgerlage in einem Fahrzeugreifenrohling. Hierbei richtet sich die Art der Weiterverarbeitung insbesondere danach, in welchem Bauteil des Fahrzeugreifens die Festigkeitsträgerlage eingesetzt wird. Insbesondere und gemäß einer bevorzugten Ausführungsform der Erfindung werden die Festigkeitsträger aus Schritt d) mit einer Gummierungsmischung ummantelt.

Die Gummierungsmischung enthält hierzu bevorzugt wenigstens einen Dienkautschuk, der besonders bevorzugt ausgewählt ist aus der Gruppe bestehend aus natürlichem Polyisopren (NR) und/oder synthetischem Polyisopren (IR) und/oder Butadien-Kautschuk (BR) und/oder Styrol-Butadien-Kautschuk (SBR), sowie bevorzugt 20 bis 90 phr wenigstens eines Füllstoffes der bevorzugt ausgewählt ist aus der Gruppe bestehend aus Ruß und Kieselsäure.

Es kann sich um alle dem Fachmann bekannten Dienkautschuke der oben genannten Gruppe handeln.

Die Gummierungsmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Gummierungsmischung als Dienkautschuk Polybutadien (BR), kann es sich dabei sowohl um cis-1,4- als auch um Vinyl-Polybutadien (ca 10-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Styrol-Butadien-Copolymere einsetzbar. Bei den Styrol-Butadien-Copolymeren kann es sich um lösungspolymerisierte Styrol-Butadien-Copolymere (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden können. Die S-SBR können auch gekoppelt und endgruppenmodifiziert sein. Es können aber auch emulsionspolymerisierte Styrol-Butadien-Copolymere (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die Styrol-Butadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxy-Gruppen und/oder EpoxyGruppen und/oder Siloxan-Gruppen und/oder Aminogruppen und/oder Phthalocyanin-Gruppen und/oder Carboxy-Gruppen und/oder Silan-Sulfid-Gruppen handeln.

Die Gummierungsmischung enthält bevorzugt 25 bis 100 phr, besonders bevorzugt 50 bis 100 phr, wiederum besonders bevorzugt 70 bis 100 phr natürliches Polyisopren und/oder synthetisches Polyisopren, bevorzugt hierbei natürliches Polyisopren.

Gemäß einer bevorzugten Weiterbildung der Erfindung enthält die Gummierungsmischung 100 phr wenigstens eines natürlichen Polyisoprens (NR) und/oder synthetischen Polyisoprens (IR), womit auch ein Gemisch aus NR und IR denkbar ist.

Gemäß einer weiteren bevorzugten Weiterbildung der Erfindung enthält die Gummierungsmischung 25 bis 85 phr wenigstens eines natürlichen und/oder synthetischen Polyisoprens und 15 bis 50 phr wenigstens eines Butadien-Kautschuks und/oder 15 bis 50 phr wenigstens eines Styrol-Butadien-Kautschuks. Insbesondere mit diesen Kautschuken zeigen sich, insbesondere in Festigkeitsträgerlagen von Fahrzeugreifen, sehr gute physikalische Eigenschaften der Gummierungsmischung hinsichtlich der Verarbeitbarkeit, der Haltbarkeit und der Reißeigenschaften, während ein ausreichendes Haftungsniveau erzielt wird.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Gemäß einer vorteilhaften Ausführungsform der Erfindung enthält die Gummierungsmischung 50 bis 100 phr wenigstens eines natürlichen und/oder synthetischen Polyisoprens und 30 bis 90 phr wenigstens eines Rußes. Hierdurch ergibt sich eine besonders gute strukturelle Haltbarkeit der hergestellten Festigkeitsträgerlage, insbesondere bei der Verwendung in Fahrzeugreifen.

Ferner können in geringen Mengen, 0 bis 10 phr, gemäß einer bevorzugten Ausführungsform von 0,1 bis 10 phr, weitere Füllstoffe wie Alumosilicate, Kreide, Stärke, Magnesiumoxid, Titandioxid oder Kautschukgele enthalten sein.

Weiterhin ist es denkbar, dass die Kautschukmischung Kohlenstoffnanoröhrchen (carbon nanotubes (CNT) inklusive diskreter CNTs, sogenannten hollow carbon fibers (HCF) und modifizierter CNT enthaltend eine oder mehrere funktionelle Gruppen, wie Hydroxy-, Carboxy und Carbonyl-Gruppen) enthält.

Auch Graphit und Graphene sowie sogenannte "carbon-silica dual-phase filler" sind als Füllstoff denkbar.

Bevorzugt ist die Gummierungsmischung jedoch frei von diesen weiteren Füllstoffen, d.h. sie enthält bevorzugt 0 bis 0,001 phr dieser weiteren Füllstoffe.

Zinkoxid wird im Rahmen der vorliegenden Erfindung nicht als Füllstoff betrachtet.

Wird Ruß in der Gummierungsmischung eingesetzt, handelt es sich bevorzugt um solche Typen, die eine STSA-Oberfläche (gemäß ASTM D 6556) von mehr als 30 m²/g, bevorzugt 30 bis 120 m²/g, aufweisen. Diese lassen sich einfach einmischen und gewährleisten einen geringen Wärmeaufbau.

Gemäß einer bevorzugten Weiterbildung der Erfindung enthält die Gummierungsmischung wenigstens einen Ruß, der eine Jodadsorptionszahl gemäß ASTM D 1510 von 40 bis 110 g/kg und eine STSA-Oberfläche (gemäß ASTM D 6556) von 40 bis 120 m²/g aufweist. Mit einem derartigen Ruß wird insbesondere aufgrund der vergleichsweise hohen Oberfläche eine ausreichende Verstärkung und Festigkeit der Gummierungsmischung erreicht, um die Festigkeitsunterschiede zwischen Festigkeitsträgern und Kautschuk der Gummierungsmischung möglichst gut auszugleichen. Ein möglicher bevorzugter Rußtyp ist z.B. der Ruß N326 mit einer Jodadsorptionszahl gemäß ASTM D 1510 von 82 g/kg und einer STSA-Oberfläche (gemäß ASTM D 6556) von 76 m²/g. Ein weiterer möglicher bevorzugter Rußtyp ist z.B. der Ruß N660 mit einer Jodadsorptionszahl gemäß ASTM D 1510 von 36 g/kg und einer STSA-Oberfläche (gemäß ASTM D 6556) von 34 m²/g.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 120 bis 250 m²/g, aufweist. Als Kieselsäuren können sowohl konventionelle Kieselsäure wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen. Kieselsäuren werden bevorzugt in Mengen von weniger als 15 phr eingesetzt.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Gummierungsmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:

-SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3 `-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261^{®} der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363^{®} von der Firma Evonik Industries vertrieben werden. Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.

Gemäß einer bevorzugten Ausführungsform der Erfindung enthält die Gummierungsmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften.

Weiterhin kann die Gummierungsmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Gummierungsmischung ergeben.

Es können in der Gummierungsmischung noch 0 bis 70 phr, bevorzugt 0,1 bis 60 phr, zumindest eines Weichmachers vorhanden sein. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL; wie sie in der DE 10 2008 037714 A1 offenbart sind)) oder Öle auf Basis nachwachsender Rohstoffe (wie z. B. Rapsöl, Terpenöle (z. B. Orangenöle) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der Gummierungsmischung Flüssig-Polymere als Weichmacher eingesetzt, so gehen diese nicht als Kautschuk in die Berechnung der Zusammensetzung der Polymermatrix (phr-Berechnung) ein.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die Gummierungsmischung übliche Zusatzstoffe in üblichen Gewichtsteilen enthalten. Zu diesen Zusatzstoffen zählen
A) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
B) Aktivatoren, wie z. B. Zinkoxid und Fettsäuren (z. B. Stearinsäure),
C) Wachse,
D) Harze, insbesondere Klebharze, die keine Weichmacherharze sind,
E) Methylenakzeptoren, wie Resorcin und Resorcinäquivalente und/oder Methylendonor/Formaldehydspender, wie z. B. Hexamethoxymethylmelamin (HMMM) und/oder Hexamethylentetramin (HMT), oder Resorcin-Ersatz wie Phenolharze und modifizierte Phenolharze,
F) Mastikationshilfsmittel, wie z. B. 2,2'-Dibenzamidodiphenyldisulfid (DBD) und
G) Verarbeitungshilfsmittel, wie z.B. Fettsäuresalze, wie z.B. Zinkseifen, und Fettsäureester und deren Derivate, wie z.B. PEG-Carbonsäureester.

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr, Schwefel bevorzugt in Mengen von 0,4 bis 4 phr) der Gummierungsmischung zugesetzt. Die Vulkanisation kann auch in Anwesenheit von sehr geringen Schwefelmengen in Kombination mit schwefelspendenden Substanzen erfolgen.

Des Weiteren kann die Gummierungsmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.

Die Herstellung der Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierung der Festigkeitsträger erfolgt ebenfalls auf dem Fachmann bekannte Weise.

Ebenso erfolgt die Weiterverarbeitung zu einer Festigkeitsträgerlage auf einem Reifenrohling auf dem Fachmann bekannte Weise.

Beispielsweise werden die Festigkeitsträger mit der Gummierungsmischung zusammen kalandriert und zurechtgeschnitten und die so erhaltene gummierte Festigkeitsträgerlage an die entsprechende Stelle auf der Reifenaufbaumaschine aufgelegt.

Bevorzugt werden die Festigkeitsträger in Verfahrensschritt f) wenigstens in der Karkasslage und/oder dem Gürtel und/oder einer Bandage und/oder dem Wulstverstärker verarbeitet. Hierbei ist es auch denkbar, dass die wie beschrieben erfindungsgemäß behandelten Festigkeitsträger in allen der genannten Bauteile eingesetzt werden, wobei sich die oben genannten Vorteile hinsichtlich der Substanzen und der vereinfachten Herstellung sowie der ausreichenden Haftung ergeben. Bei der Bandage handelt es sich insbesondere um ein oder mehrere Gürtelbandagen.

Ein weiterer Gegenstand der vorliegenden Erfindung ist ein Fahrzeugreifen, der nach dem erfindungsgemäßen Verfahren hergestellt ist. Hierbei gelten sämtliche obige Ausführungen.

Der erfindungsgemäße Fahrzeugreifen ist auf eine vergleichsweise einfache Weise hergestellt, wobei auf die gesundheits- und umweltschädlichen Substanzen Resorcin und Formaldehyd verzichtet wird.

Ein weiterer Gegenstand der vorliegenden Erfindung ist die Verwendung von textilen Festigkeitsträgern, die nach dem Verfahren umfassend wenigstens die folgenden Verfahrensschritte hergestellt sind, in technischen Gummiartikeln, wie insbesondere Gurten, insbesondere Fördergurte, Riemen, insbesondere Antriebsriemen, Schläuchen, Bändern, insbesondere Transportbändern, und Luftfederbälgen:
a) Bereitstellen von textilen Festigkeitsträgern;
b) Bereitstellen eines Bades, welches frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen, durch wenigstens folgende Verfahrensschritte:
   b1) Zugabe wenigstens einer Polycarbonsäure zu Wasser; und
   b2) Zugabe wenigstens einer Base; und
   b3) Zugabe wenigstens einer Epoxy-Verbindung; und
   b4) Zugabe wenigstens einer Polyisocyanat-Verbindung; und
   b5) Zugabe wenigstens eines VP-Latex; und
   b6) Vermischen der Substanzen aus b1) bis b5);
c) Tauchen der Festigkeitsträger aus Schritt a) in dem Bad aus Schritt b);
d) Anschließende Heißverstreckung der getauchten Festigkeitsträger aus Schritt c) bei einer Temperatur im Bereich von 100 °C bis 260 °C, wobei das Bad aus Schritt b6) die Polycarbonsäure in einer Menge von 0,1-10 Gew.-%, bevorzugt 0,1-2 Gew.-%, die Epoxy-Verbindung in einer Menge von 0,1 bis 2 Gew.-%, die Polyisocyanat-Verbindung in einer Menge von 0,7 bis 3 Gew.-% und den wenigstens einen VP-Latex in einer Menge von 6 bis 25 Gew.-% enthält.

Für das Verfahren gelten sämtliche obigen Ausführungen. Durch die Verwendung der wie beschrieben behandelten Festigkeitsträgern in technischen Gummiartikeln, weisen diese eine vergleichbare Haltbarkeit auf, wobei auf die umwelt- und gesundheitsgefährdenden Substanzen Resorcin und Formaldehyd in dem Bad für die Festigkeitsträger verzichtet werden kann. Die Herstellung der technischen Gummiartikel unter Verwendung der behandelten Festigkeitsträger erfolgt ansonsten mit im Stand der Technik bekannten Verfahren und Vorrichtungen.

Die Erfindung soll nun anhand der nachstehenden Beispiele näher erläutert werden. Corde aus Nylon (PA 6.6 ^{a)}) wurden bereitgestellt und in einem Vergleichsbad (aus dem Stand der Technik auf Basis von Resorcin-Formaldehyd-Latex RFL) als auch in erfindungsgemäßen Bädern (frei von Resorcin und Formaldehyd RF) gemäß den Angaben aus Tabelle 1 getaucht.

Ferner wurden nicht-haftungsaktivierte Corde aus einem Polyester (PET ^{b)}) bereitgestellt und in den genannten Bädern getaucht. Im Fall des RFL-Bades (Vergleichsbad aus dem Stand der Technik) mussten die nicht-haftungsaktivierten PET-Corde (PET ^{b)}) in einem Vordip (Vortauchbad enthaltend 95,26 Gew.-% Wasser und 0,90 Gew.-% Denacol EX313 ^{h)} und 3,84 Gew.-% Grilbond IL6 ⁱ⁾) durch Tauchen darin vorbehandelt ^{k)} werden. Im Fall des erfindungsgemäßen Bades wurden die nicht-haftungsaktivierten Corde (PET ^{b)}) zum einen mit dem oben genannten Vordip vorbehandelt ^{k)} und zum anderen ohne Vordip ^{l)} eingesetzt.

### Verwendete Materialien

a) Polyamid 6.6 (Nylon): Corde aus 2 Garnen: 940 dtex x2; Gewebe aus den Corden mit 80 epdm (ends per decimeter; Maß für die Corddichte in der Textillage)
b) Polyethylenterephthalat (PET): Corde aus 2 Garnen: 1440 dtex x2; Gewebe aus den Corden mit 121 epdm; nicht-haftungsaktiviert
c) wässrige Lösung; 25 Gew.-% Ammoniumhydroxid
d) wässrige Lösung; 50 Gew.-% Natriumhydroxid
e) Resorcin-Formaldehyd-Vorkondensat: 75 Gew.-% Feststoffgehalt in wässriger Lösung
f) wässrige Lösung: 37 Gew.-% Formaldehyd
g) Acrylharz (Polycarbonsäure): 50 Gew.-% Feststoffgehalt in wässriger Lösung
h) Epoxy-Verbindung: Glycerol-basierter Polyglycidylether
i) Polyisocyanat-Verbindung: 60 Gew.-% Feststoffgehalt in wässriger Lösung
j) Vinyl-Pyridin-Latex: 41 Gew.-% VP-Polymer in Wasser
k) Haftungsaktivierung durch Vortauchbad enthaltend 95,26 Gew.-% Wasser und 0,90 Gew.-% Denacol EX313 ^{h)} und 3,84 Gew.-% Grilbond IL6 ⁱ⁾
l) Keine Haftungsaktivierung durch ein Vortauchbad

**Tabelle 1**

| | **RFL-Bad, Gew.-%** | **RF freies Bad, Gew.-%** | |
|---|---|---|---|
| **Bestandteile** | **PA6.6 ^{a)}/ PET ^{b): + k)}** | **PA6.6 ^{a)}** | **PET ^{b): + k) oder l)}** |
| Wasser | 46,49 | 60,41 | 49,54 |
| NH₄OH ^{c)} | 2,25 | 0,28 | 0,13 |
| NaOH ^{d)} | 0,17 | | |
| Penacolite ^{e)} | 3,14 | | |
| Formaldehyd ^{f)} | 2,28 | | |
| Acrodur 950 L ^{g)} | | 0,79 | 0,36 |
| Denacol EX313 ^{h)} | | 1,15 | 1,60 |
| Grilbond IL6 ⁱ⁾ | | 3,25 | 4,52 |
| VP-Latex ^{j)} | 45,67 | 34,12 | 43,85 |

Nach dem Tauchen und anschließender Heißverstreckung wurden die Festigkeitsträger jeweils mit einer Gummierungsmischung gemäß Tabelle 2 ummantelt.

**Tabelle 2**

| **Bestandteile Gummierungsmischung** | **Menge, phr** |
|---|---|
| Naturkautschuk | 70 |
| SBR | 30 |
| Ruß N660 | 50 |
| Zinkoxid | 4 |
| Stearinsäure | 2 |
| Öl | 5 |
| Penacolite (Resorcin-Formaldehyd- | 3 |
| Hexamethoxymethyl melamine | 2 |
| 2,2,4-Trimethyl-1,2-Dihydroquinolin | 1,8 |
| Schwefel | 2,5 |
| 2,2'-Dibenzothiazyldisulfid (MBTS) | 0,8 |

Bei allen beschriebenen Festigkeitsträgern wurden Haftungstest mit oben genannter Gummierungsmischung gemäß ISO 36:2011 durchgeführt. Die vulkanisierten Proben wurden für 30 min auf 120°C erhitzt und der Haftungstest innerhalb von 30 Sekunden nach Herausnahme aus dem Ofen durchgeführt. Die Bewertung der Haftkraft wurde gemäß DIN ISO 6133 durchgeführt. Zudem wurde der Trennfläche auf einer Skala von 0 bis 10 im Hinblick auf die Bedeckung mit Gummierungsmischung bewertet. Diese Bewertung erfolgte durch visuelle Kontrolle gemäß ASTM D4393. Für jedes Beispiel stellen die angegebene Haftkraft und die angegebene Bedeckung den Mittelwert aus jeweils drei Messungen dar.

Die Ergebnisse sind in Tabelle 3 zusammengefasst.

**Tabelle 3**

| | **RFL-Bad (Vergleich)** | | **RF freies Bad (Erfindung)** | |
|---|---|---|---|---|
| | Trennkraft (%) | Bedeckung | Trennkraft (%) | Bedeckung |
| PA6.6 ^{a)} | 100% | 9 | 104% | 9 |
| Polyester ^{b)+k)} | 100% | 10 | 101% | 10 |
| Polyester ^{b)+l)} | | | 111 % ^{m)} | 10 |

| | | | | |
|---|---|---|---|---|
| ^{m)} bezogen auf Polyester ⁺ mit RFL-Bad und Vordip | | | | |

Wie in Tabelle 3 erkennbar, zeigen die Festigkeitsträger, die erfindungsgemäß behandelt wurden, eine vergleichbare oder sogar verbesserte Haftung.

Insbesondere die nicht-haftungsaktivierten PET-Festigkeitsträger (PET ^{b)}) konnten durch das oben angegebene erfindungsgemäße RF-freie Bad in nur diesem einen Bad behandelt werden, ohne, dass ein Vordip wie im Fall des RFL-Bades aus dem Stand der Technik nötig war.

Somit weist der erfindungsgemäß hergestellte Fahrzeugreifen oder technische Gummiartikel unter Verwendung der erfindungsgemäß behandelten Festigkeitsträger eine vergleichbare Haltbarkeit auf, wobei auf die umwelt- und gesundheitsgefährdenden Substanzen Resorcin und Formaldehyd in dem Bad für die Festigkeitsträger verzichtet werden kann.

## Patentansprüche

1. Verfahren zur Herstellung eines Fahrzeugreifens umfassend wenigstens eine Festigkeitsträgerlage mit textilen Festigkeitsträgern, wobei das Verfahren wenigstens die folgenden Schritte umfasst:
a) Bereitstellen von textilen Festigkeitsträgern;
b) Bereitstellen eines Bades, welches frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen, durch wenigstens folgende Verfahrensschritte:
b1) Zugabe wenigstens einer Polycarbonsäure zu Wasser; und
b2) Zugabe wenigstens einer Base; und
b3) Zugabe wenigstens einer Epoxy-Verbindung; und
b4) Zugabe wenigstens einer Polyisocyanat-Verbindung; und
b5) Zugabe wenigstens eines VP-Latex; und
b6) Vermischen der Substanzen aus b1) bis b5);
c) Tauchen der Festigkeitsträger aus Schritt a) in dem Bad aus Schritt b);
d) Anschließende Heißverstreckung der getauchten Festigkeitsträger aus Schritt c) bei einer Temperatur im Bereich von 100°C bis 260°C;
e) Weiterverarbeitung der Festigkeitsträger aus Schritt d) zu einer Festigkeitsträgerlage in einem Fahrzeugreifenrohling, indem der Festigkeitsträger aus Schritt d) mit einer Gummierungsmischung ummantelt wird, die wenigstens einen Dienkautschuk, ausgewählt aus der Gruppe, bestehend aus natürlichem Polyisopren und/oder synthetischem Polyisopren und/oder Butadien-Kautschuk und/oder Styrol-Butadien-Kautschuk, enthält;
f) Vulkanisation des Fahrzeugreifenrohlings,
wobei das Bad aus Schritt b6) die Polycarbonsäure in einer Menge von 0,1-10 Gew.-%, bevorzugt 0,1-2 Gew.-%, die Epoxy-Verbindung in einer Menge von 0,1 bis 2 Gew.-%, die geblockte Polyisocyanat-Verbindung in einer Menge von 0,7 bis 3 Gew.-% und den wenigstens einen VP-Latex in einer Menge von 6 bis 25 Gew.-% enthält.

2. Verfahren nach Anspruch 1, **dadurch gekennzeichnet, dass** die textilen Festigkeitsträger in Schritt a) ausgewählt sind aus der Gruppe bestehend aus Polyethylenterephthalat (PET), Polyethylennaphthalat (PEN), Polybutylenterephthalat (PBT), Polycarbonat (PC), Cellulosen, Regeneratcellulosen, Celluloseestern, Carbonfasern, Polyketonen, m-Aramid, p-Aramid, Gemischen aus m-Aramid und p-Aramid und Polyamiden, welche ausgewählt sind aus der Gruppe bestehend aus Polyamid 46 (PA 4.6), Polyamid 410 (PA 4.10), Polyamid 6 (PA 6), Polyamid 66 (PA 6.6 Polyhexamethylenadipinamid), Polyamid 612 (PA 6.12), Polyamid 1010 (PA 10.10) und Polyamid 1212 (PA 12.12), wobei auch eine Kombination von zwei oder mehreren sämtlicher genannter textilen Festigkeitsträger umfasst ist.

3. Verfahren nach einem der vorherigen Ansprüche, **dadurch gekennzeichnet, dass** die Polycarbonsäure in Schritt b1) zu 10 bis 100 mol-% auf Carbonsäuregruppen-haltigen Monomeren basiert.

4. Verfahren nach einem der vorherigen Ansprüche, **dadurch gekennzeichnet, dass** die Polycarbonsäure in Schritt b1) ein Gewichtsmittel des Molekulargewichtes M_{w} gemäß GPC von 1.000 bis 500.000 g/mol hat.

5. Verfahren nach einem der vorherigen Ansprüche, **dadurch gekennzeichnet, dass** es sich bei der Polycarbonsäure in Schritt b1) um ein Acrylharz handelt.

6. Verfahren nach einem der vorherigen Ansprüche, **dadurch gekennzeichnet, dass** die Polycarbonsäure einen Polyalkohol als Vernetzer beinhaltet.

7. Verfahren nach einem der vorherigen Ansprüche, **dadurch gekennzeichnet, dass** die Base in Schritt b2) Ammoniumhydroxid ist.

8. Verfahren nach einem der vorherigen Ansprüche, **dadurch gekennzeichnet, dass** die Epoxy-Verbindung in Schritt b3) ausgewählt ist aus der Gruppe bestehend aus Glycidyl-basiertem Glycerol, Sorbitol basierten Epoxy-Verbindungen, Phenol basierten Novolak Epoxy-Verbindungen und Cresol basierten Novolak Epoxy-Verbindungen.

9. Verfahren nach einem der vorherigen Ansprüche, **dadurch gekennzeichnet, dass** die Polyisocyanat-Verbindung in Schritt b4) Bausteine umfasst, die ausgewählt sind aus der Gruppe bestehend aus Tetramethylendiisocyanat, Hexamethylendiisocyanat, Diphenylmethan-4,4'-Diisocyanat, Octamethylendiisocyanat, Decamethylendiisocyanat, Dodecamethylendiisocyanat, aromatische Diisocyanate umfassend 2,4- oder 2,6-Toluoldiisocyanat, Tetramethylxyloldiisocyanat, p-Xyloldiisocyanat, 2,4`- oder 4,4`-Diisocyanatdiphenylmethan, 1,3- oder 1,4-Phenyldiisocyanat.

10. Verfahren nach einem der vorherigen Ansprüche **dadurch gekennzeichnet, dass,** die Festigkeitsträger in Verfahrensschritt f) wenigstens in der Karkasslage und/oder dem Gürtel und/oder einer Bandage und/oder dem Wulstverstärker verarbeitet werden.

11. Fahrzeugreifen hergestellt nach einem der Ansprüche 1 bis 10.

12. Verwendung von textilen Festigkeitsträgern, die nach dem Verfahren umfassend wenigstens die folgenden Verfahrensschritte hergestellt sind, in technischen Gummiartikeln auf der Basis einer Gummierungsmischung, die wenigstens einen Dienkautschuk, ausgewählt aus der Gruppe, bestehend aus natürlichem Polyisopren und/oder synthetischem Polyisopren und/oder Butadien-Kautschuk und/oder Styrol-Butadien-Kautschuk, enthält, wie insbesondere Gurten, insbesondere Fördergurte, Riemen, insbesondere Antriebsriemen, Schläuchen, Bändern, insbesondere Transportbändern, und Luftfederbälgen:
a) Bereitstellen von textilen Festigkeitsträgern;
b) Bereitstellen eines Bades, welches frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen, durch wenigstens folgende Verfahrensschritte:
b1) Zugabe wenigstens einer Polycarbonsäure zu Wasser; und
b2) Zugabe wenigstens einer Base; und
b3) Zugabe wenigstens einer Epoxy-Verbindung; und
b4) Zugabe wenigstens einer Polyisocyanat-Verbindung; und
b5) Zugabe wenigstens eines VP-Latex; und
b6) Vermischen der Substanzen aus b1) bis b5);
c) Tauchen der Festigkeitsträger aus Schritt a) in dem Bad aus Schritt b);
d) Anschließende Heißverstreckung der getauchten Festigkeitsträger aus Schritt c) bei einer Temperatur im Bereich von 100°C bis 260°C,
wobei das Bad aus Schritt b6) die Polycarbonsäure in einer Menge von 0,1-10 Gew.-%, bevorzugt 0,1-2 Gew.-%, die Epoxy-Verbindung in einer Menge von 0,1 bis 2 Gew.-%, die geblockte Polyisocyanat-Verbindung in einer Menge von 0,7 bis 3 Gew.-% und den wenigstens einen VP-Latex in einer Menge von 6 bis 25 Gew.-% enthält.

## Claims

1. A method of manufacturing a vehicle tire comprising at least one strength member ply having textile strength members, said method comprising at least the following steps:
a) providing textile strength members;
b) providing a bath which is free from free resorcinol and resorcinol precondensates, in particular resorcinol-formaldehyde precondensates, and is free from free formaldehyde and formaldehyde-releasing substances, by at least the following process steps:
b1) addition of at least one polycarboxylic acid to water; and
b2) addition of at least one base; and
b3) adding at least one epoxy compound; and
b4) addition of at least one polyisocyanate compound; and
b5) addition of at least one VP latex; and
b6) mixing the substances from b1) to b5);
c) immersing the strength members from step a) into the bath of step b);
d) subsequent hot stretching of the immersed strength members from step c) at a temperature in the range from 100°C to 260°C;
e) further processing the strength members of step d) into a strength member ply in a vehicle tire blank by coating the strength member of step d) with a rubberizing compound containing at least one diene rubber selected from the group consisting of natural polyisoprene and/or synthetic polyisoprene and/or butadiene rubber and/or styrene-butadiene rubber;
f) vulcanizing the vehicle tire blank, wherein the bath of step b6) contains the polycarboxylic acid in an amount of 0.1-10 wt%, preferably 0.1-2 wt%, the epoxy compound in an amount of 0.1-2 wt%, the blocked polyisocyanate compound in an amount of 0.7-3 wt%, and the at least one VP latex in an amount of 6-25 wt%.

2. Method according to claim 1, **characterized in that** the textile strength members in step a) are selected from the group consisting of polyethylene terephthalate (PET), polyethylene naphthalate (PEN), polybutylene terephthalate (PET), polycarbonate (PC), celluloses, regenerated celluloses, cellulose esters, carbon fibers, polyketones, m-aramid, p-aramid, mixtures of m-aramid and p-aramid and polyamides selected from the group consisting of polyamide 46 (PA 4. 6), polyamide 410 (PA 4.10), polyamide 6 (PA 6), polyamide 66 (PA 6.6 polyhexamethylene adipamide), polyamide 612 (PA 6.12), polyamide 1010 (PA 10.10) and polyamide 1212 (PA 12.12), wherein a combination of two or more of the mentioned textile strength members is comprised.

3. Method according to one of the preceding claims, **characterized in that** the polycarboxylic acid in step b1) is based to the extent of 10 to 100 mol% on monomers containing carboxylic acid groups.

4. Method according to any one of the preceding claims, **characterized in that** the polycarboxylic acid in step b1) has a weight-average molecular weight Mw, as measured by GPC, of from 1,000 to 500,000 g/mol.

5. Method according to any one of the preceding claims, **characterized in that** the polycarboxylic acid in step b1) is an acrylic resin.

6. Method according to any one of the preceding claims, **characterized in that** the polycarboxylic acid comprises a polyalcohol as a crosslinker.

7. Method according to any one of the preceding claims, **characterized in that** the base in step b2) is ammonium hydroxide.

8. Method according to any one of the preceding claims, **characterized in that** the epoxy compound in step b3) is selected from the group consisting of glycidyl-based glycerol, sorbitol-based epoxy compounds, phenol-based novolak epoxy compounds and cresol-based novolak epoxy compounds.

9. Method according to any one of the preceding claims, **characterized in that** the polyisocyanate compound in step b4) comprises building blocks selected from the group consisting of tetramethylene diisocyanate, hexamethylene diisocyanate, diphenylmethane-4,4'-diisocyanate, octamethylene diisocyanate, decamethylene diisocyanate, dodecamethylene diisocyanate, aromatic diisocyanates comprising 2,4- or 2,6-toluene diisocyanate, tetramethylxylene diisocyanate, p-xylene diisocyanate, 2,4'- or 4,4'-diisocyanate diphenylmethane, 1,3- or 1,4-phenyl diisocyanate.

10. Method according to one of the preceding claims, **characterized in that** the reinforcing agents are processed in process step f) at least in the carcass ply and/or the belt and/or a bandage and/or the bead reinforcer.

11. Vehicle tire manufactured according to one of claims 1 to 10.

12. Use of textile strength members produced by the method comprising at least the following method steps in technical rubber articles based on a rubberizing mixture comprising at least one diene rubber selected from the group, consisting of natural polyisoprene and/or synthetic polyisoprene and/or butadiene rubber and/or styrene-butadiene rubber, such as in particular belts, in particular conveyor belts, belts, in particular drive belts, slings, straps, in particular conveyor straps, and air spring bellows:
a) Providing textile strength members;
b) providing a bath which is free of free resorcinol as well as resorcinol precondensates, in particular resorcinol-formaldehyde precondensates, and is free of free formaldehyde as well as formaldehyde-releasing substances, by at least the following process steps:
b1) addition of at least one polycarboxylic acid to water; and
b2) addition of at least one base; and
b3) adding at least one epoxy compound; and
b4) addition of at least one polyisocyanate compound; and
b5) addition of at least one VP latex; and
b6) mixing the substances from b1) to b5);
c) immersing the strength member from step a) in the bath from step b);
d) subsequently hot stretching the immersed strength members of step c) at a temperature in the range of 100°C to 260°C,
wherein the bath of step b6) contains the polycarboxylic acid in an amount of 0.1-10 wt%, preferably 0.1-2 wt%, the epoxy compound in an amount of 0.1-2 wt%, the blocked polyisocyanate compound in an amount of 0.7-3 wt% and the at least one VP latex in an amount of 6-25 wt%.

## Revendications

1. Procédé de fabrication d'un pneu de véhicule comprenant au moins une couche de supports de renfort avec des supports de renfort textiles, dans lequel le procédé comprend au moins les étapes suivantes :
a) de fourniture de supports de renfort textiles ;
b) de fourniture d'un bain, qui est sans résorcinol libre et sans précondensats de résorcinol, en particulier de précondensats de résorcinol-formaldéhyde, et qui est sans formaldéhyde libre et sans substances libérant du formaldéhyde, par au moins des étapes de procédé suivantes :
b1) d'ajout d'au moins un acide polycarboxylique à de l'eau ; et
b2) d'ajout d'au moins une base ; et
b3) d'ajout d'au moins un composé époxy ; et
b4) d'ajout d'au moins un composé de polyisocyanate ; et
b5) d'ajout d'au moins un latex VP ; et
b6) de mélange des substances issues de b1) à b5) ;
c) d'immersion des supports de renfort issus de l'étape a) dans le bain issu de l'étape b) ;
d) d'étirement à chaud ultérieur des supports de renfort immergés issus de l'étape c) à une température dans la plage de 100 °C à 260 °C ;
e) de traitement ultérieur des supports de renfort issus de l'étape d) en une nappe de supports de renfort dans une ébauche de pneu de véhicule en ce que le support de renfort issu de l'étape d) est enrobé d'un mélange d'engommage, qui contient au moins un caoutchouc diénique choisi parmi le groupe constitué de polyisoprène naturel et/ou de polyisoprène synthétique et/ou de caoutchouc-butadiène et/ou de caoutchouc de styrène-butadiène ;
f) de vulcanisation de l'ébauche de pneu de véhicule,
dans lequel le bain issu de l'étape b6) contient l'acide polycarboxylique en une quantité de 0,1 à 10 % en poids, de manière préférée de 0,1-2 % en poids, le composé époxy en une quantité de 0,1 à 2 % en poids, le composé à base de polyisocyanate bloqué en une quantité de 0,7 à 3 % en poids et l'au moins un latex en VP en une quantité de 6 à 25 % en poids.

2. Procédé selon la revendication 1, **caractérisé en ce que** les supports de renfort textiles sont choisis à l'étape a) parmi le groupe constitué de polytéréphtalate d'éthylène (PET), de polynaphtalate d'éthylène (PEN), de polytéréphtalate de butylène (PET), de polycarbonate (PC), de celluloses, de celluloses régénérées, d'esters de cellulose, de fibres de carbone, de polycétones, de m-aramide, de p-aramide, de mélanges composés de m-aramide et de p-aramide et de polyamides, lesquels sont choisis parmi le groupe constitué de polyamide 46 (PA 4.6), de polyamide 410 (PA 4.10), de polyamide 6 (PA 6), de polyamide 66 (PA 6.6) polyhexaméthylène adipamide), polyamide 612 (PA 6.12), de polyamide 1010 (PA 10.10) et de polyamide 1212 (PA 12.12), dans lequel une combinaison de deux ou de plusieurs de la totalité des supports de renfort textiles mentionnés est également comprise.

3. Procédé selon l'une quelconque des revendications précédentes, **caractérisé en ce que** l'acide polycarboxylique est à base à l'étape b1) de monomères contenant des groupes d'acide carboxylique à hauteur de 10 à 100 % en mole.

4. Procédé selon l'une quelconque des revendications précédentes, **caractérisé en ce que** l'acide polycarboxylique a à l'étape b1) un poids moléculaire moyen en poids M_{w} selon GPC de 1000 à 500 000 g/mol.

5. Procédé selon l'une quelconque des revendications précédentes, **caractérisé en ce que** l'acide polycarboxylique est à l'étape b1) une résine acrylique.

6. Procédé selon l'une quelconque des revendications précédentes, **caractérisé en ce que** l'acide polycarboxylique contient en tant qu'agent de réticulation un polyalcool.

7. Procédé selon l'une quelconque des revendications précédentes, **caractérisé en ce que** la base est à l'étape b2) un hydroxyde d'ammonium.

8. Procédé selon l'une quelconque des revendications précédentes, **caractérisé en ce que** le composé époxy est choisi à l'étape b3) parmi le groupe constitué de glycérol à base de glycidyle, de composés époxy à base de sorbitol, de composés époxy novolak à base de phénol et de composés époxy novolak à base de crésol.

9. Procédé selon l'une quelconque des revendications précédentes, **caractérisé en ce que** le composé de polyisocyanate comprend à l'étape b4) des blocs, qui sont choisis parmi le groupe constitué de diisocyanate de tétraméthylène, de diisocyanate d'hexaméthylène, de diisocyanate-4,4'-diphénylméthane, de diisocyanate d'octaméthylène, de diisocyanate de décaméthylène, de diisocyanate de dodécaméthylène, de diisocyanates aromatiques comprenant du 2,4-diisocyanate de toluol ou du 2,6-diisocyanate de toluol, du tetraméthylxyloldiisocyanate, de p-xyloldiisocyanate, de diphényle méthane-2,4'-diisocyanate ou de diphényle méthane-4,4'-diisocyanate, de 1,3-phényle diisocyanate ou 1,4-phényle diisocyanate.

10. Procédé selon l'une quelconque des revendications précédentes, **caractérisé en ce que** les supports de renfort sont traités à l'étape de procédé f) au moins dans la nappe de carcasse et/ou dans la ceinture et/ou dans un bandage et/ou dans le renfort de bourrelet.

11. Pneumatique de véhicule fabriqué selon l'une quelconque des revendications 1 à 10.

12. Utilisation de supports de renfort textiles dans des articles techniques en caoutchouc sur la base d'un mélange d'engommage, qui contient au moins un caoutchouc diénique choisi parmi le groupe constitué d'un polyisoprène naturel et/ou d'un polyisoprène synthétique et/ou de caoutchouc de butadiène et/ou de caoutchouc de styrène-butadiène, comme notamment des sangles, en particulier des sangles de convoyage, des courroies, en particulier des courroies d'entraînement, des tuyaux flexibles, des bandes, en particulier des bandes transporteuses, et des coussins d'air, lesquels sont fabriqués selon le procédé comprenant au moins les étapes de procédé suivantes :
a) la fourniture de supports de renfort textiles ;
b) la fourniture d'un bain, qui est sans résorcinol libre et sans précondensats de résorcinol, en particulier de précondensats de résorcinol-formaldéhyde, et qui est sans formaldéhyde libre et sans substances libérant du formaldéhyde, par au moins des étapes de procédé suivantes :
b1) d'ajout d'au moins un acide polycarboxylique à de l'eau ; et
b2) d'ajout d'au moins une base ; et
b3) d'ajout d'au moins un composé époxy ; et
b4) d'ajout d'au moins un composé de polyisocyanate ; et
b5) d'ajout d'au moins un latex VP ; et
b6) de mélange des substances issues de b1) à b5) ;
c) l'immersion des supports de renfort issus de l'étape a) dans le bain issu de l'étape b) ;
d) l'étirement à chaud ultérieur des supports de renfort immergés issus de l'étape c) à une température dans la plage de 100 °C à 260 °C,
dans lequel
le bain issu de l'étape b6) contient de l'acide polycarboxylique en une quantité de 0,1-10 % en poids, de manière préférée de 0,1-2 % en poids, le composé époxy en une quantité de 0,1 à 2 % en poids, le composé de polyisocyanate bloqué en une quantité de 0,7 à 3 % en poids et l'au moins un latex VP en une quantité de 6 à 25 % en poids.
